# EUROPÄISCHE PATENTSCHRIFT

(11) **EP 1 060 456 B1**
(45) Veröffentlichungstag und Bekanntmachung des Hinweises auf die Patenterteilung: **23.10.2002**
(21) Anmeldenummer: 99968401.2
(22) Anmeldetag: 31.12.1999
(51) Int. Cl.: G06K 13/08

(54) **KARTENSPERRE FÜR SMART CARD CONNECTOR**
CARD BLOCKING DEVICE FOR A SMART CARD CONNECTOR
DISPOSITIF DE BLOCAGE DE CARTE POUR CONNECTEUR DE CARTE A PUCE

(30) Priorität: 31.12.1998 DE 19860883; 30.12.1999 DE 19963777
(43) Veröffentlichungstag der Anmeldung: 20.12.2000
(73) Patentinhaber: AMPHENOL-TUCHEL ELECTRONICS GmbH, D-74080 Heilbronn (DE)
(72) Erfinder: FEESER, Reiner, D-74080 Heilbronn (DE)
(74) Vertreter: Wagner, Karl H., Dipl.-Ing.
(86) Internationale Anmeldenummer: EP9910483
(87) Internationale Veröffentlichungsnummer: WO00041129

(56) Entgegenhaltungen:
- EP-A- 0 468 146
- EP-A- 0 780 785

## Beschreibung

Die Erfindung bezieht sich auf einen Smart Card Connector (auch als Chipkartenleser oder kurz als Leser bezeichnet) insbesondere der Push/Push Bauart. Insbesondere bezieht sich die Erfindung auch auf eine Kartensperre (auch als Kartenverriegelungsvorrichtung oder Kartensicherung bezeichnet) für einen solchen Push/Push-Smart Card Connector (Push/Push-Leser).

Aus dem deutschen Patent P 36 25 306 ist bereits ein Smart Card Connector bekannt, bei dem ein sogenannter Führungs- oder Federkragen verwendet wird. Die Erfindung sieht auch eine Verbesserung im Zusammenhang mit diesem Federkragen vor.

Der vorliegenden Erfindung liegt die Aufgabe zu Grunde einen Smart Card Connector, insbesondere der Push/Push-Bauart, derart auszugestalten, daß die Smart- oder Chipkarte (kurz: Karte) nach dem Stecken nicht zugänglich ist. Vorzugsweise soll die Karte in einem Lesezustand gesperrt sein. Nach dem Lesevorgang soll die Karte, durch wiederholten Druck auf den Feder- bzw. Führungskragen in eine Ein/Ausgabeposition zurückkommen.

Erfindungsgemäß wird eine Kartensperre, insbesondere für einen Push/Push-Leser vorgesehen, wobei als Leser vorzugsweise einer mit flacher Bauform verwendet wird.

Solche Kartensperren werden in Dokumenten EP-A-468 146 und EP-A-780 785 dargestellt.

Erfindungsgemäß wird als Kartenführung und Kartenschutz ein vorzugsweise mittengeführtes Führungselement, welches insbesondere als Führungs- bzw. Federkragen ausgebildet ist, vor die den eigentlichen Leser bildende Baugruppe gesetzt. Der Federkragen kann zusammen mit einem daran angebrachten Hebel und mit einer Herzkurve eine "Kugelschreibermechanik" bilden. Folglich kann der Federkragen (der, wie erwähnt auch allgemein als Führungselement zu bezeichnen ist) in bekannter Weise drei Positionen einnehmen, und zwar:
1. eine vordere Ein/Ausgabeposition,
2. eine mittlere Rast/Leseposition und
3. eine hintere Position/Auslösehub.

Erfindungsgemäß ist die Kartenverriegelungsvorrichtung, die insbesondere ein einen Kartenschacht des Lesers sperrendes oder freigebendes Sperrelement aufweist, so gestaltet, daß es die Karte im Federkragen
- in der mittleren und hinteren Position sperrt, und
- in der vorderen Position freigibt.

Vorzugsweise ist das Sperrelement ein Federelement, insbesondere eine Blattfeder, die durch eine besondere Ausgestaltung des Federkragens betätigbar ist. Beispielsweise erfolgt die Bestätigung mittels eines Stifts. Das Sperrelement dient dazu einen zur Einführung und Herausnahme der Karte dienenden Schacht des Lesers zu öffnen (Öffnungsstellung) oder zu schließen (Schließstellung).

Die Erfindung vermeidet Fehlfunktionen, die bei frei zugänglichen Karten, insbesondere den Push-Push-Lesern, auftreten können, da diese häufig fälschlich nach der Push/Pull Art betätigt werden. Bei Kraftfahrzeuganwendungen schützt der erfindungsgemäß gestaltete Federkragen vor Verletzungen durch überstehende Karten. Durch die erfindungsgemäße Ausgestaltung der Kartensperre ergibt sich eine hohe Vibrationssicherheit.

Insbesondere dadurch, daß die Kartensperrung direkt durch ein Federelement erfolgt, ergibt sich eine geringe Bauhöhe, die insbesondere im Zusammenhang mit einem Push/Push-Leser vorteilhaft ist. Die durch die erfindungsgemäße Konstruktion zu erreichende Bauhöhe ist beispielsweise kleiner als 6mm.

Weitere Vorteile, Ziele und Einzelheiten der Erfindung ergeben sich aus der Beschreibung eines Ausführungsbeispiels anhand der Zeichnung; in der Zeichnung zeigt:
- Figur 1: einen Push/Push-Leser, und zwar insbesondere eine schematische Schnittansicht einer Kartenverriegelungsvorrichtung mit einem Sperrelement, für den Push/Push-Leser, wobei der Schnitt gemäß der Linie I-I in Figur 2 verläuft;
- Figur 2: eine Draufsicht auf die Kartenverriegelungsvorrichtung der Figur 1 in ihrer Ein-/Ausgabeposition und in Öffnungsstellung;
- Figur 3: einen Schnitt längs Linie III-III in Fig. 4;
- Figur 4: eine Draufsicht auf die Kartenverriegelungsvorrichtung gemäß Figur 3 in ihrer mittleren Rast/Leseposition und zwar bei geschlossenem Sperrelement (Schließstellung).

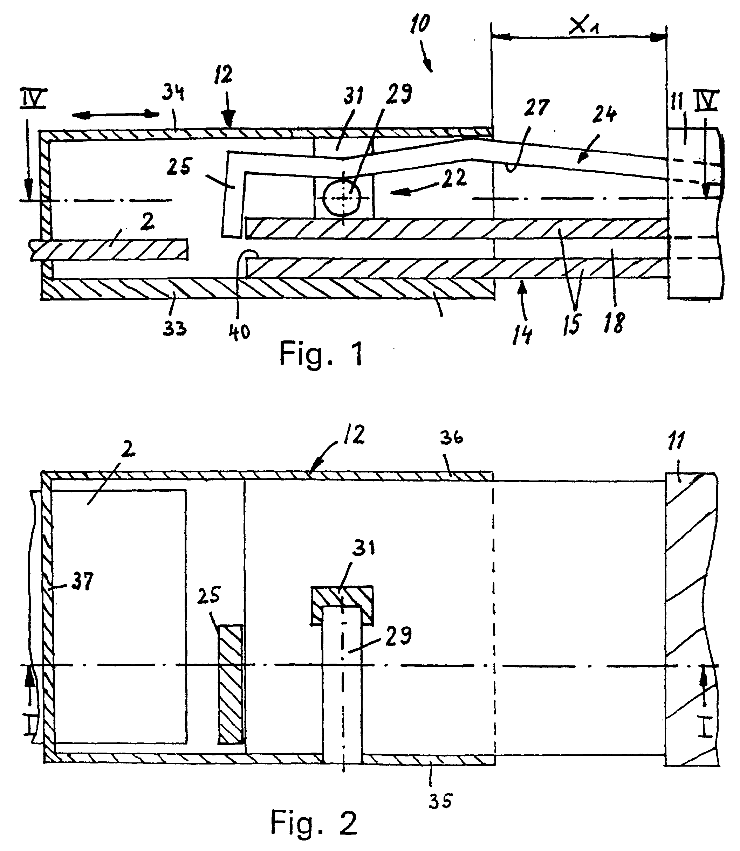

Figur 1 zeigt einen Push/Push-Smart Card Connector 10 (auch kurz Push/Push-Leser genannt) in den eine Smart Card 2 eingeschoben werden kann. Ein Feder- oder Führungskragen 12 ist ähnlich wie in dem deutschen Patent P3625306 vorgesehen. Der Smart Card Connector 10 weist einen bei 11 angedeuteten Gehäuseteil auf, in dem beispielsweise ein nicht gezeigter Kontaktschlitten hin und her bewegbar angeordnet ist. Dieser Kontaktschlitten kann sich beispielsweise beim Einschieben der Smart Card 2 (kurz: Karte oder Chipkarte 2) in den Push/Push-Leser 10 auf die Kontaktzonen der Karte 2 absenken.

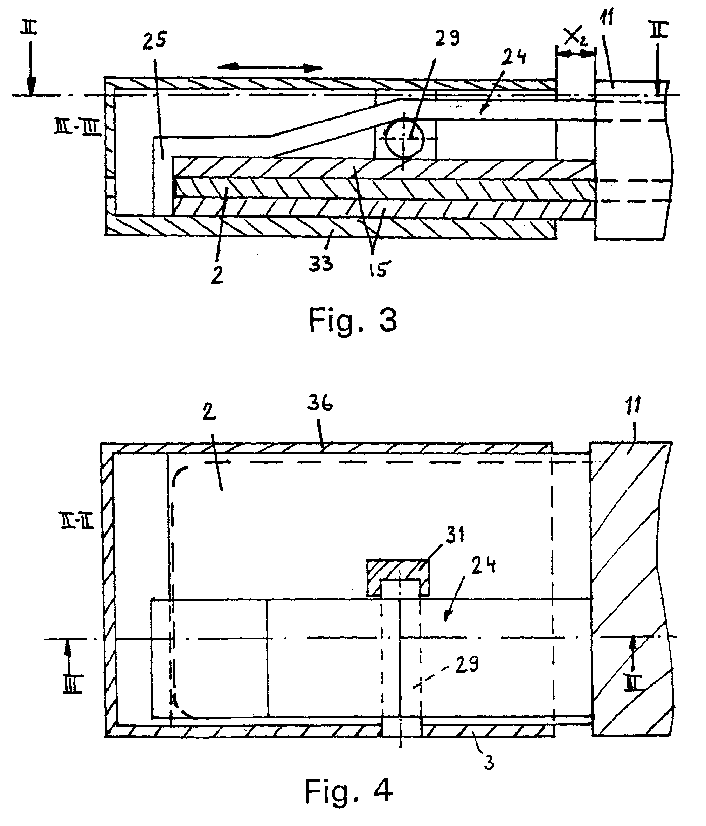

Ferner weist der Push/Push-Leser 10 den bereits erwähnten Führungs- oder Federkragen (allgemein ein Führungselement) 12 auf der aus der in Figur 1 gezeigten vorderen Ein/Ausgabeposition heraus zum Gehäuseteil 11 hin verschoben werden kann (Hub x₁) um sodann (Hub x₂) eine in Figur 3 gezeigte mittlere Rast/Leseposition einzunehmen. Wenn man die Karte 2 aus der mittleren Rast/Leseposition wieder entnehmen möchte, so muß man bei dem Smart Card Leser 10 der Push/Push Bauart ausgehend von der Position gemäß Figur 3 wieder auf den Führungskragen 12 drücken und diesen zum Gehäuseteil 11 entgegen der Kraft einer Feder (diese ist nicht gezeigt, spannt aber den Führungskragen 12 in Richtung der linken Pfeilspitze in Figur 1 und 3 vor) hin bewegen. Nach Durchlaufen des Hubs X₂ in Richtung der rechten Pfeilspitze durch den von Hand auf den Führungskragen 12 ausgeübten Druck, erlaubt die bekannte einleitend erwähnte Mechanik daß der Führungskragen 12 durch die nicht gezeigte Feder in seine vordere Ein/Ausgabeposition gemäß Figur 1 zurückgeführt wird. Die in der Zeichnung nicht dargestellte Feder könnte beispielsweise zwischen dem Federkragen 12 und dem Gehäuseteil 11 wirken und den Feder- bzw. Führungskragen 12 in die in Figur 1 gezeigte Position vorspannen. Wie gesagt, beim Verschieben des Führungskragens 12 zum Gehäuseteil 11, von der vorderen Ein/Ausgabeposition zur hinteren Position hin, würde dieser entgegen der Kraft dieser Feder verschoben werden.

Der Push/Push Smart Card Connector 10 der Erfindung verwendet dabei vorzugsweise die bekannte einleitend erläuterte Mechanik die es gestattet, daß der Führungskragen 12 aus der Position gemäß Figur 1 durch Schieben (push) in seine mittlere Rast/Leseposition gebracht werden kann. Aus dieser mittleren Rast/Leseposition kann der Führungskragen 12 durch weiteres Schieben (push) in seine hintere Position gebracht werden, die den Auslösehub nach links, in Richtung der Ein/Ausgabeposition gemäß den Figuren 1 und 2 auslöst.

Erfindungsgemäß ist nun eine Kartenverriegelungsvorrichtung 22 (auch als Kartensperre oder Kartenverriegelung bezeichnet) vorgesehen. Diese Kartenverriegelungsvorrichtung 22 sichert wie in den Figuren 3 und 4 gezeigt die in der mittleren Rast/Leseposition befindliche Karte 2 gegenüber einem Zugriff.

im Einzelnen ist gemäß dem gezeigten Ausführungsbeispiel ein am Gehäuseteil 11 angebrachter Kartenschachtteil 14 vorgesehen. Der Kartenschachtteil 14 besitzt obere und untere Schachtwände 15 sowie nicht gezeigte seitliche Schachtwände, die mitsamt einen Kartenschacht 18 definieren, der zur Aufnahme der Smart Card 2 dient. Der Schacht 18 ist zu seinem vorderen oder linken Ende hin gemäß Figur 1 offen (Öffnung 40) um das Einschieben der Smart Card 2 zu gestatten. Der Schacht 18 ist auch an seinem entgegengesetzt liegenden hinteren Ende offen, so daß die Karte 2 mit ihrem die Kontaktzonen tragenden Ende in den Gehäuseteil 11 ragen kann, wo die Kontaktierung beispielsweise durch einen Kontaktelemente tragenden Schlitten mit den Kontaktzonen der Karte 2 vorgenommen wird, wenn sich die Karte 2 in der in Figur 3 gezeigten mittleren Rast/Leseposition befindet.

Der Führungskragen 12 ist gleitend auf dem Kartenschachtteil 14 zur hin- und her-Bewegung zwischen den genannten Positionen angeordnet. Der Führungskragen 12 besitzt eine Unterwand 33 eine Oberwand 34 seitliche Wände 35 und 36 sowie eine vordere Wand 37. In der vorderen Wand 37 ist eine schlitzförmige Öffnung vorgesehen, um die Karte 2 hindurch zu stecken so daß diese in den Aufnahmeschacht 18 gelangen kann. Wie bereits erwähnt ist der Führungskragen 12 (der deshalb auch als Federkragen 12 bezeichnet wird, weil er durch die erwähnte nicht gezeigte Feder in die Position gemäß Figur 1 vorgespannt wird). Es sei nochmals betont, daß der Führungskragen 12 der bereits erwähnten Mechanik gekoppelt ist, die den erwähnten Push/Push Bewegungsablauf für den Führungskragen 12 sicherstellt.

Die erfindungsgemäße Verriegelungsvorrichtung 22 weist ein Sperrelement 24 auf, welches im dargestellten Ausführungsbeispiel als Blattfeder 24 ausgebildet ist Diese Blattfeder ist mit ihrem rechten Ende (vergleiche Figur 1) beispielsweise am Gehäuseteil 11 in irgendeiner geeigneten Weise befestigt und ist in Folge der innewohnenden Federwirkung bestrebt die in Figur 3 gezeigte Position einzunehmen und den Kartenschacht 18 zu verschließen. Zur Betätigung des Sperrelements 24 sind Steuermittel vorzugsweise in der Form eines Stiftes 29 vorgesehen. Die Blattfeder 24 kann eine Metall- oder Kunststoffeder sein.

Das Sperrelement 24 erstreckt sich, vergleiche Figur 4, nicht über die-gesamte Breite des Führungskragens 12 hinweg sondern nur über etwa die Hälfte von dessen Breite. Das Sperrelement 24 hat ferner wie in Figur 1 gezeigt eine abgewinkelte Nockenfläche 27. Diese Nockenfläche 27 liegt durch die dem Sperrelement 24 vorzugsweise innewohnende Federkraft mit der Nockenfläche 27 an den Steuermitteln vorzugsweise in der Form eines Stiftes 29 an. Der Stift 29 ist seinerseits über einen Wandteil 31 mit dem Führungskragen 12 verbunden. Wie aus Figur 4 ersichtlich ist der Stift 29 nicht nur im Wandteil 31 gehalten, sondern auch mit seinem entgegengesetzt liegenden Ende in der Seitenwand 35.

Wenn somit der Führungskragen 12 aus der in Figur 1 gezeigten Position in die in Figur 3 gezeigten Position verschoben wird, so kann die Nockenfläche 27 auf dem Stift 29 gleiten und das Sperrelement 24 senkt sich ab. Auf diese Weise gelangt ein am linken Ende (vergleiche Figur 1) des Sperrelements 24 angebrachter Wandteil 25 vor die linke Öffnung 40 zum Schacht 18 und verschließt diese. Bei umgekehrter Bewegung des Führungskragens 12 wird der Führungsschacht 18 wieder geöffnet.

Vorzugsweise ist der Führungskragen 12 mit einem im Gehäuseteil 11 hin und her bewegbar angeordneten Kontaktelemente tragenden Schlitten gekuppelt, dadurch wird erreicht, daß bei einer Bewegung des Führungskragens 12 zum Gehäuseteil 11 hin der nicht gezeigte bewegliche Kontaktträger zu den Kontaktzonen der Karte 2 hin abgesenkt wird.

## Patentansprüche

1. Kartensperre (22) für einen einen Gehäuseteil (11) aufweisenden Smart Card Connector der Push/Push Bauweise mit einem Sperrelement (24) welches eine zur Einführung der Smart Card (2) dienende Öffnung (40) eines am Gehäuseteil (11) angebrachten Kartenschachtes (18) dann abschließt, wenn sich die Karte (2) in einer Leseposition befindet und die Öffnung (40) dann öffnet, wenn die Karte (2) in den Smart Card Connector eingeführt, oder aus diesem entnommen werden soll, **dadurch gekennzeichnet daß**, das Sperrelement (24) eine Blattfeder ist die in eine die Öffnung (40) des Kartenschachtes (18) verschließende Position vorgespannt ist und entgegen dieser Federkraft durch zur Betätigung des Sperrelements (24) dienende Steuermittel (29) geöffnet werden kann, und wobei die Blattfeder (24) eine Kunststoff bzw. Metallblattfeder ist die mit ihrem einen Ende am Push/Push Smart Card Connector bzw. einem Gehäuseteil (11) desselben befestigt ist, während das andere freie Ende abgewickelt ist und ein Verriegelungswandteil (25) bildet, so daß sich eine im ganzen hakenförmige Form ergibt.

2. Kartensperre nach Anspruch 1, wobei ein Führungselement (12) hin und her beweglich direkt oder indirekt am Smart Card Connector (10) gelagert ist und abhängig von seiner Bewegung das Sperrelement (24) betätigt welches infolge dessen die Öffnung (40) öffnet oder verschließt.

3. Kartensperre nach Anspruch 2, wobei die Steuermittel (29)am Führungselement (12) angebracht sind.

4. Kartensperre nach einem der Ansprüche 1 und 3, wobei die Steuermittel (12) in der Form eines Stiftes (29) ausgebildet sind.

5. Kartensperre nach Anspruch 4, wobei der Stift (29) mit einer Nockenfläche (27) der Kartenverriegelungsvorrichtung zusammenarbeitet um eine Öffnung (40) des Kartenschachtes (18) zu öffnen oder zu verschließen.

6. Kartensperre nach einem der Ansprüche 2-5, wobei das Führungselement (12) durch eine Feder in eine Öffnungsstellung vorgespannt ist und entgegen der Kraft dieser Feder auf einem Kartenschachtteil (14) zu dem Smart Card Connector (10) der Push/Push-Bauweise hin verschiebbar ist

7. Kartensperre nach Anspruch 6, wobei das Führungselement ein Führungskragen (12) ist.

8. Kartensperre nach Anspruch 7, wobei eine Mechanik vorgesehen ist, die für den Führungskragen eine vordere Ein/Ausgabeposition, eine mittlere Rast/Leseposition und eine hintere Position definiert, welch letztere den Auslösehub vorsieht.

## Claims

1. A card blocking apparatus (22) for a smart card connector of the push/push design having a housing member (11) and comprising a blocking element (24) adapted to block an opening (40) of a card slot (18) mounted at said housing member (11), said opening (40) being blocked by said blocking element in case a card (2) is inserted into its reading position, while said blocking member (24) opens that opening when the card (2) is to be inserted into or when the card (2) is to be removed from the smart card connector **characterized in that** the blocking element (24) is biased by means of a leaf spring in a position in a position closing said opening (40) of the card insert (18), said blocking element being adapted to be opened against said spring forth by control means (29) adapted to actuate said blocking element (24), and
when the leaf spring (24) is a plastic leaf spring and metal spring, respectively which is mounted with its one end at the push/push smart card connector and a housing part (11) thereof, while the other free end is angled and forms a locking wall portion (25) such that a generally hookshaped form results.

2. A card blocking apparatus according to claim 1 wherein a guide element (12) is directly or indirectly reciprocally mounted at the smart card connector (10) and actuates depending on its movement the blocking element (24) which consequently opens or closes the opening (40).

3. A card blocking apparatus according to claim 1 wherein the control means (29) are mounted at the guide element (12).

4. A card blocking apparatus according to claims 1 and 3 wherein the control means 12 are provided in the form of a pin (29).

5. A card blocking apparatus according to claim 4 wherein the pin (29) cooperates with a cam surface (27) of the card locking apparatus so as to open or close an opening (40) of the card insert (18).

6. A card blocking apparatus according to one of claims 2 to 5 wherein the guide element (12) is biased by means of a spring into an opening position and is movable against the force of said spring on a card insert portion (14) towards the smart card connector (10) of the push/push design.

7. A card blocking apparatus according to claim 6, wherein the guide element is guide collar (12).

8. A card blocking apparatus according to claim 7 when a mechanic is provided which provides for the guide collar a forward input/output position, a middle locking/reading position and a rearward position when that rearward position provides for the release movement.

## Revendications

1. Dispositif de blocage de carte (22) pour un connecteur de carte à puce du type poussée/poussée, comportant une partie de boîtier (11) et comportant un élément de blocage (24), qui ferme une ouverture (40), utilisée pour l'introduction de la carte à puce (2), d'un conduit à carte (18) monté sur la partie de boîtier (11), lorsque la carte (2) est située dans une position de lecture et ouvre l'ouverture (40), lorsque la carte (2) est introduite dans le conducteur de carte à puce ou doit être retirée de ce dernier, **caractérisé en ce que** l'élément de blocage (24) est un ressort à lame, qui est précontraint dans une position qui ferme l'ouverture (40) du conduit à carte (18) et peut être ouverte à l'encontre de cette force de ressort à l'aide de moyens de commande (29) utilisés pour l'actionnement de l'élément de blocage (24), et dans lequel le ressort à lame (24) est un ressort à lame en matière plastique ou en métal, qui est fixé par une extrémité au connecteur de carte à puce du type poussée/poussée ou à une partie de boîtier (11) de ce connecteur, tandis que l'autre extrémité libre est déroulée et forme un élément de paroi de verrouillage (25) de sorte qu'on obtient globalement une forme de crochet.

2. Dispositif de blocage de carte selon la revendication 1, dans lequel un élément de guidage (12) est monté de manière à être déplaçable en va-et-vient directement ou indirectement sur le connecteur de carte à puce (10) et ouvre ou ferme l'ouverture (40) et, en fonction de son déplacement, actionne l'élément de blocage (24) qui, en fonction de ce déplacement, ouvre ou ferme l'ouverture (40).

3. Dispositif de blocage de carte selon la revendication 2, dans lequel les moyens de commande (22) sont montés sur l'élément de guidage (12).

4. Dispositif de blocage de carte selon l'une des revendications 1 et 3, dans lequel les moyens de commande (12) sont réalisés sous la forme d'une tige (29).

5. Dispositif de blocage de carte selon la revendication 4, dans lequel la tige (29) coopère une surface de came (27) du dispositif de verrouillage de carte de manière à ouvrir ou fermer une ouverture (40) du logement à carte (18).

6. Dispositif de blocage de carte selon l'une des revendications 2 à 5, dans lequel l'élément de guidage (12) est précontraint par un ressort dans une position d'ouverture et peut être repoussé à l'encontre de la force de ce ressort sur une partie (14) du conduit à carte en direction du connecteur (10) de carte à puce du type poussée/poussée.

7. Dispositif de blocage de carte selon la revendication 6, dans lequel l'élément de guidage est un capot de guidage (12).

8. Dispositif de blocage de carte selon la revendication 7, dans lequel il est prévu un mécanisme qui définit pour le capot de guidage une position d'entrée/sortie avant, une position médiane d'encliquetage/de lecture et une position arrière, cette dernière définissant la course de déclenchement.
